(19) Europäisches Patentamt / European Patent Office / Office européen des brevets

(11) **EP 3 282 389 B1**

(12) **EUROPEAN PATENT SPECIFICATION**

(45) Date of publication and mention
of the grant of the patent:
**10.01.2024 Bulletin 2024/02**

(21) Application number: **17183395.7**

(22) Date of filing: **26.07.2017**

(51) International Patent Classification (IPC):
**G06V 20/56** *(2022.01)*

(52) Cooperative Patent Classification (CPC):
**G06V 20/56; G06V 20/588**

(54) **IMAGE PROCESSING APPARATUS, IMAGE CAPTURING APPARATUS, MOVING BODY APPARATUS CONTROL SYSTEM, IMAGE PROCESSING METHOD, AND PROGRAM**

BILDVERARBEITUNGSVORRICHTUNG, BILDERFASSUNGSVORRICHTUNG, STEUERUNGSSYSTEM EINER VORRICHTUNG EINES BEWEGLICHEN KÖRPERS, BILDVERARBEITUNGSVERFAHREN UND PROGRAMM

APPAREIL DE TRAITEMENT D'IMAGE, APPAREIL DE CAPTURE D'IMAGE, SYSTÈME DE COMMANDE D'APPAREIL DE CORPS MOBILE, PROCÉDÉ DE TRAITEMENT D'IMAGE, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2016 JP 2016156259**

(43) Date of publication of application:
**14.02.2018 Bulletin 2018/07**

(73) Proprietor: **Ricoh Company, Ltd.**
**Tokyo 143-8555 (JP)**

(72) Inventor: **MOTOHASHI, Naoki**
**Tokyo 143-8555 (JP)**

(74) Representative: **Marks & Clerk LLP**
**15 Fetter Lane**
**London EC4A 1BW (GB)**

(56) References cited:
**WO-A1-2015/053100     WO-A1-2016/031494**
**US-A1- 2015 294 160**

• **LOOSE H ET AL: "B-spline-based road model for 3d lane recognition", INTELLIGENT TRANSPORTATION SYSTEMS (ITSC), 2010 13TH INTERNATIONAL IEEE CONFERENCE ON, IEEE, PISCATAWAY, NJ, USA, 19 September 2010 (2010-09-19), pages 91-98, XP031792524, ISBN: 978-1-4244-7657-2**

**Description**

1. Field of the Invention

The disclosures herein generally relate to an image processing apparatus, an image capturing apparatus, a moving body apparatus control system, an image processing method, and a program, in particular for estimating a road surface.

2. Description of the Related Art

Regarding vehicle safety, vehicle body structures have conventionally been developed from viewpoints of how to save pedestrians and how to protect vehicle passengers, if a collision with a pedestrian or a vehicle occurs. In recent years, however, according to advancements of information processing technology and image processing technology, techniques for detecting humans or vehicles at high speed have been developed. By utilizing such technologies, vehicles that apply automatic braking before a collision occurs to prevent the collision are already on the market.

To apply automatic braking, it is necessary to measure a distance from a vehicle to an object such as a human or another vehicle. For this reason, measurements using images of a stereo camera are used practically.

To detect an object such as a human or another vehicle, first, a road surface needs to be detected. Unless the road surface is detected correctly, the road surface might potentially be falsely recognized as a human or another vehicle, for example.

Japanese Unexamined Patent Application Publication No. 2011-128844 discloses a technique of detecting a road surface, even in a case where no traffic lane is marked, in accordance with the following processing. First, a frequency histogram is generated with a horizontal axis representing disparity values and a vertical axis representing frequencies of the disparity values. Next, the highest point in the disparity value frequencies is determined as a representative value of disparities in each of y-coordinates. Then, such a representative value is plotted on an imaginary plane to include a group of disparity points in a horizontal direction to correspond to each of y-coordinates in a disparity image, and is utilized for estimating road surfaces.

In the above-described related art, however, when detecting the road surface according to a disparity image, a disparity of an object other than the road surface might be erroneously determined to be a disparity of the road surface.

WO 2016/031494 A1 and EP3188118A1 disclose an object detecting device capable of accurately detecting an object even far away, and of shortening processing time. Loose et al., 13th International IEEE Annual Conference on Intelligent Transportation Systems, Portugal, September 19-22, 2010 discloses a B-spline-based road model for 3D lane recognition.

Therefore, it is an object to provide a technique of improving the accuracy for detecting a road surface.

**SUMMARY OF THE INVENTION**

There is provided an image processing apparatus, according to claim 1, and an image processing method, according to claim 8.

The disclosed technique enables improvements in accuracy in detecting the road surface.

**BRIEF DESCRIPTION OF THE DRAWINGS**

FIG. 1 is a diagram illustrating a configuration of an in-vehicle apparatus control system in one embodiment;
FIG. 2 is a diagram illustrating configurations of an image capturing unit and an image analyzing unit;
FIG. 3 is a functional block diagram of a moving body apparatus control system;
FIG. 4A and FIG. 4B illustrate disparity image data for describing a V map generated from the disparity image data;
FIG. 5A illustrates an image example of a captured image serving as a reference image that has been captured by one of imaging units;
FIG. 5B is a V map corresponding to the captured image of FIG. 5A;
FIG. 6 is a flowchart illustrating one example of a V map generating process in a first embodiment;
FIG. 7 is a diagram illustrating a calculation method for calculating an actual distance;
FIG. 8 is a diagram illustrating a relationship between the actual distance and the number of pixels;
FIG. 9 illustrates an image example of a captured image as a reference image that has been captured by one of the imaging units, and also illustrates a V map in a given area corresponding to the captured image;
FIG. 10 is a diagram illustrating a case where disparities are extracted from the entire area in a disparity image to generate a V map;
FIG. 11 is a functional block diagram illustrating one example of a road surface estimating unit;
FIG. 12 is a flowchart illustrating one example of a sample point extracting process;
FIG. 13 is a flowchart illustrating one example of an out-of-range point removing process;
FIG. 14 is a diagram illustrating the out-of-range point removing process;
FIG. 15 is a flowchart illustrating one example of a V map generating process in a second embodiment;
FIG. 16 is a diagram illustrating a method for calculating a horizontal movement amount x; and
FIG. 17 is a diagram illustrating one example of a disparity extraction area that has been moved according to the value of the radius gyration R.

## DESCRIPTION OF THE EMBODIMENTS

In the following, a moving body apparatus control system including an image processing apparatus will be described.

<First Embodiment>

<Configuration of In-vehicle Apparatus Control System>

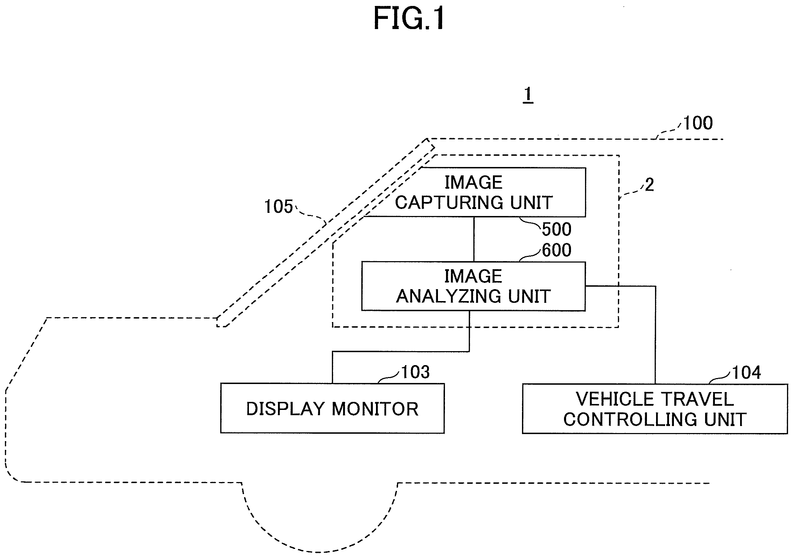

FIG. 1 is a diagram illustrating an in-vehicle apparatus control system serving as the moving body apparatus control system in one embodiment.

An in-vehicle apparatus control system 1 is mounted in a vehicle 100, such as a motor car serving as a moving body. The in-vehicle apparatus control system 1 includes an image capturing unit 500, an image analyzing unit 600, a display monitor 103, and a vehicle travel controlling unit 104. The image capturing unit 500 detects relative height information (information indicating a relatively sloping situation) of a road surface (a surface to be travelled) that is ahead of the vehicle serving as a moving body, from captured image data of an area (an image-captured area) ahead of the vehicle in a vehicle travelling direction. The image capturing unit 500 detects a three-dimensional shape on the surface to be travelled that is ahead of the vehicle from a detection result, and controls the moving body and various in-vehicle apparatuses using the detection result. Such controlling of the moving body includes, for example, an alarming notice, controlling of a steering wheel of the vehicle 100 (the moving body), or braking of the vehicle 100 (the moving body).

The image capturing unit 500 is, for example, disposed near a room mirror (not illustrated) at a front windshield 105 of the vehicle 100. Various types of data such as captured image data obtained by capturing images using the image capturing unit 500 are input into the image analyzing unit 600, serving as an image processing unit.

The image analyzing unit 600 analyzes data transmitted from the image capturing unit 500, detects a relative height (positional information) of each point on the road surface to be travelled that is ahead of the vehicle, with respect to a road surface part on which the vehicle 100 is travelling (a road surface part located immediately below the vehicle), and identifies a three-dimensional shape of the road surface to be travelled that is ahead of the vehicle. Additionally, the image analyzing unit 600 recognizes recognition targets such as other vehicles, pedestrians, and various obstacles that are ahead of the vehicle.

Analysis results of the image analyzing unit 600 are sent to the display monitor 103 and to the vehicle travel controlling unit 104. The display monitor 103 displays the captured image data obtained by the image capturing unit 500 and the analysis results obtained by the image analyzing unit 600. The vehicle travel controlling unit 104 performs travel support control based on results of recognizing the recognition targets such as other vehicles, pedestrians, and various obstacles that are ahead of the vehicle, so as to give an alarm to a driver of the vehicle 100, control the steering wheel of the vehicle, or control the brake of the vehicle.

<Configurations of Image Capturing Unit 500 and Image analyzing Unit 600>

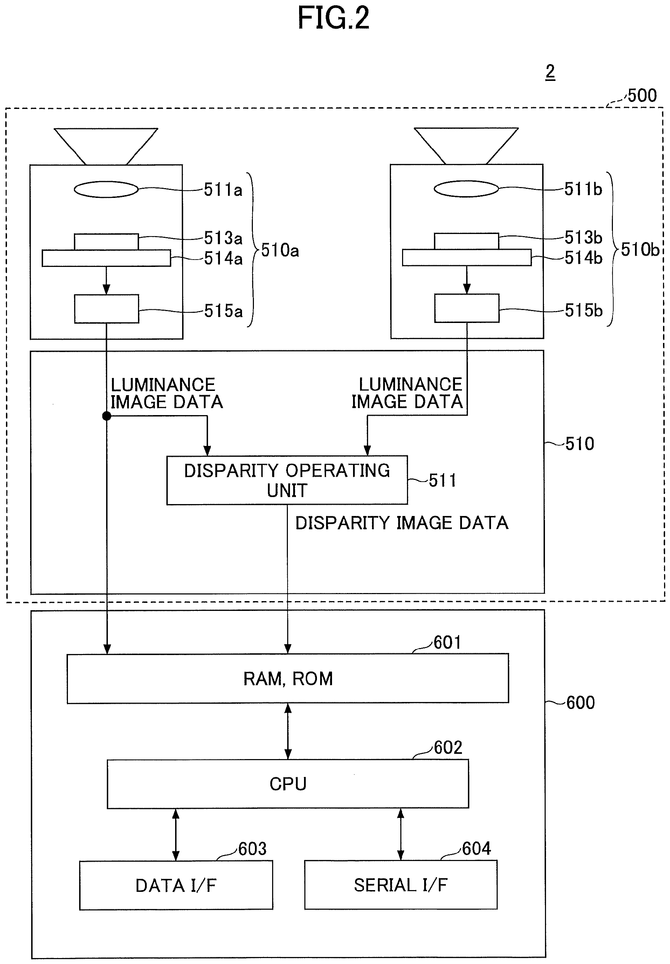

FIG. 2 is a diagram illustrating configurations of the image capturing unit 500 and the image analyzing unit 600.

The image capturing unit 500 includes a stereo camera including two imaging units 510a and 510b, each serving as an imaging unit. Such two imaging units 510a and 510b are identical. The imaging units 510a and 510b respectively include: imaging lenses 511a and 511b; sensor substrates 514a and 514b respectively including image sensors 513a and 513b, in each of which a light receiving element is two-dimensionally arranged; and signal processing units 515a and 515b. The signal processing units 515a and 515b respectively generate captured image data obtained by converting analog electric signals (electric signals respectively corresponding to light received amounts received by the light receiving elements of the image sensors 513a and 513b) output from the sensor substrates 514a and 514b into digital electric signals, and respectively output the generated image data. The image capturing unit 500 outputs luminance image data and disparity image data.

The image capturing unit 500 also includes a processing hardware unit 510 including a Field-Programmable Gate Array (FPGA). The processing hardware unit 510 includes a disparity operating unit 511, serving as a disparity image information generating unit configured to operate a disparity value between corresponding image portions in the images respectively captured by the imaging units 510a and 510b, in order to obtain a disparity image from the luminance image data output from the imaging units 510a and 510b.

Herein, the disparity value is obtained by setting one of the images captured by the imaging units 510a and 510b to a reference image and the other one of the images captured by the imaging units 510a and 510b to a comparative image, and calculating a positional displacement amount of an image portion in the comparative image with respect to a corresponding image portion in the reference image, at identical points in both image captured areas, as a disparity value of the image portion. By utilizing the principle of triangulation, the distances to the identical points corresponding to the image portions in the image captured areas are calculated from the disparity value.

The image analyzing unit 600 is configured from an image processing substrate. The image analyzing unit 600 includes: a memory unit 601 including a RAM or a ROM for storing luminance image data and disparity image data output from the image capturing unit 500; a Central Processing Unit (CPU) 602 for running computer programs to perform a recognition process of recognizing a target or to perform disparity calculation control; a data interface (I/F) 603; and a serial interface (I/F) 604.

The FPGA for constituting the processing hardware unit 510 performs processing that necessitates a real-time performance for the image data, for example, gamma correction, distortion correction (averaging right and left captured images), and a disparity operation using block matching, generates information of a disparity image, and writes the information of the disparity image into the RAM of the image analyzing unit 600. The CPU 602 of the image analyzing unit 600 controls image sensor controllers of the imaging units 510a and 510b and the image processing substrate as a whole. Additionally, the CPU 602 of the image analyzing unit 600 loads, from the ROM, programs for performing a process of detecting a three-dimensional shape of a road surface and for performing a process of detecting various objects (recognition targets) including a guardrail and other objects, performs the processes using inputs of the luminance image data and the disparity image data stored in the RAM, and outputs results of the processes from the data I/F 603 and from the serial I/F 604 to the outside. In the case of performing the above processes, through the data I/F 603, vehicle operation information such as a vehicle speed, an acceleration (mainly generated in a vehicle front-rear direction), a steering angle, and a yaw rate of the vehicle 100 can be input and used as parameters of various processes. The data output to the outside may be used as input data to control various apparatuses (for brake control, vehicle speed control, and alarm control) in the vehicle 100.

Note that the image capturing unit 500 and the image analyzing unit 600 may be configured to be an imaging apparatus 2, which is integrally formed.

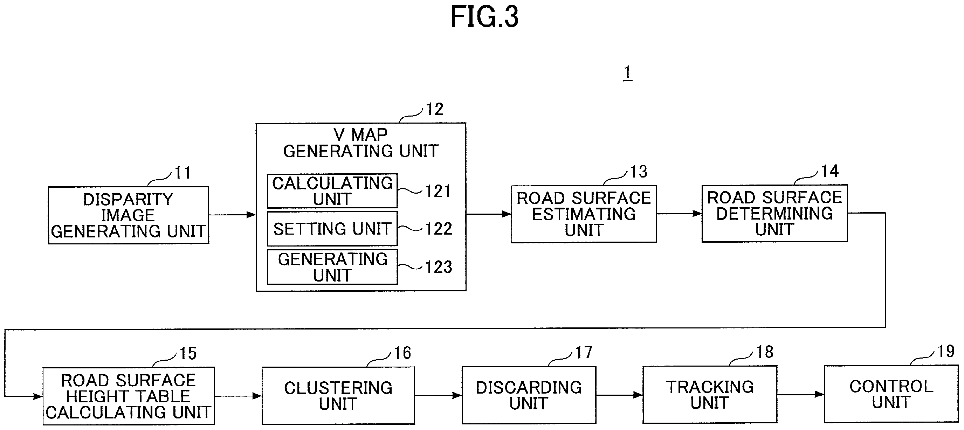

FIG. 3 is a functional block diagram of the in-vehicle apparatus control system 1, which is enabled by the processing hardware unit 510 and the image analyzing unit 600 illustrated in FIG. 2 and the vehicle travel controlling unit 104 illustrated in FIG. 1. Note that the functional units enabled by the image analyzing unit 600 are enabled by one or more programs installed in the image analyzing unit 600 being performed on the CPU 602 of the image analyzing unit 600.

Hereinafter, processes in one or more embodiments will be described.

<Disparity Image Generating Process>

A disparity image generating unit 11 performs a disparity image generating process of generating disparity image data (disparity image information). Note that the disparity image generating unit 11 is configured by, for example, the disparity operating unit 511 (FIG. 2).

In the disparity image generating process, first, luminance image data of the imaging unit 510a, which is one of the two imaging units 510a and 510b, is set as reference image data. Luminance image data of the imaging unit 510b, which is the other one of the two imaging units 510a and 510b, is set as comparative image data. By using the above data, a binocular disparity between the reference image data and the comparative image data is calculated to generate disparity image data, and the disparity image data is output. Such disparity image data is used for indicating a disparity image, in which pixel values respectively corresponding to disparity values d are calculated for respective image portions in the reference image data.

To be specific, the disparity image generating unit 11 defines a block including a plurality of pixels (e.g., 16 pixels × 1 pixel) with centering one focused pixel, in a certain line of the reference image data. Additionally, with respect to a same line of the comparative image data, while shifting a block having the same size with the size of the defined block in the reference image data on a pixel basis in a horizontal line direction (x direction), the disparity image generating unit 11 calculates each correlation value indicating a correlation between a characteristic quantity indicating a characteristic of a pixel value in the defined block in the reference image data and a characteristic quantity indicating a characteristic of a pixel value in each block in the comparative image data. By using the correlation values that have been calculated, the disparity image generating unit 11 performs a matching process of selecting a block in the comparative image data having a highest correlation with the block in the reference image data, from the blocks in the comparative image data. Subsequently, the disparity image generating unit 11 calculates a positional displacement amount between the focused pixel in the block in the reference image data and a corresponding pixel in the block in the comparative image data that has been selected by the matching process, as a disparity value d. By performing such a process of calculating the disparity values d for the entire area or a specific area in the reference image data, the disparity image generating unit 11 is capable of obtaining the disparity image data.

As a characteristic quantity of a block used for the matching process, for example, each pixel value (a luminance value) in the block can be used. As a correlation value, a total sum of absolute values of differences between, for example, pixel values (the luminance values) in a block in the reference image data and respectively corresponding pixel values (the luminance values) in the block in the comparative image data can be used. In this case, it can be considered that a block having the smallest total sum has the highest correlation.

In a case where the matching process performed by the disparity image generating unit 11 is enabled by hardware processing, for example, a method such as Sum of Squared Difference (SSD), Zero-mean Sum of Squared Difference (ZSSD), Sum of Absolute Difference (SAD), Zero-mean Sum of Absolute Difference (ZSAD), or Normalized Cross Correlation (NCC) can be utilized. Note that in the matching process, only a disparity value in units of pixels is calculated. Hence, in a case where a disparity value on a sub-pixel level smaller than one pixel is needed, an estimation value is to be used. To such an estimation method, for example, an isometric linear method or a quadratic curve method is applicable.

<V map Generating Process>

A V map generating unit 12 includes a calculating unit 121, a setting unit 122, and a generating unit 123.

The calculating unit 121 calculates a distance of a road surface according to a vertical position in a disparity image, using a road surface serving as a reference (a reference road surface).

The setting unit 122 sets a disparity extraction area, from which disparities are extracted, in the disparity image, according to the distance calculated by the calculating unit 121 and a lane width on the road surface. Note that in the following, a case where a traffic lane is used as one example of the lane will be described.

The generating unit 123 performs a V map generating process of generating a V map (a V-Disparity Map, which is one example of "vertical distribution data") based on the disparities extracted from the disparity extraction area set by the setting unit 122. Each piece of disparity pixel data included in the disparity image data is represented by a set of (x, y, d) including x direction (horizontal direction), y direction (vertical direction), and a disparity value d. Such a set is converted into three-dimensional coordinate information (d, y, f) where d is set to the X axis, y is set to the Y axis, and a frequency f is set to the Z axis, and is generated as disparity histogram information, or another type of three-dimensional coordinate information (d, y, f) that is limited to information exceeding a given frequency threshold is generated as the disparity histogram information. The disparity histogram information in one embodiment includes such three-dimensional coordinate information (d, y, f). The three-dimensional coordinate information that is distributed in an X-Y two-dimensional coordinate system is called a V map.

More specifically, the V map generating unit 12 calculates a disparity value frequency distribution for each of line areas obtained by vertically dividing the disparity image a plurality of times. Information indicating such a disparity value frequency distribution serves as the disparity histogram information.

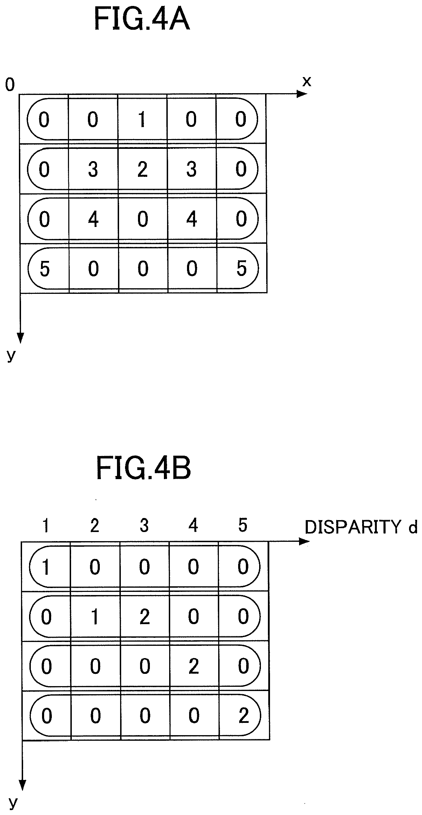

FIG. 4A and FIG. 4B illustrate disparity image data for describing a V map generated from the disparity image data. Herein, FIG. 4A illustrates one example of a disparity value distribution in a disparity image. FIG. 4B is a diagram illustrating a V map indicating the disparity value distribution of the respective lines in the disparity image of FIG. 4A.

In a case where disparity image data having the disparity value distribution as illustrated in FIG. 4A is input, the V map generating unit 12 calculates a disparity value frequency distribution that is a distribution of the number of data of the disparity values in each line, and outputs the disparity value frequency distribution as the disparity histogram information. By representing information of the disparity value frequency distribution in each line that has been obtained as described above on a two-dimensional orthogonal coordinate system where the Y axis represents positions in y direction of the disparity image (vertical positions of a captured image) and the X axis represents the disparity values d, a V map as illustrated in FIG. 4B is obtained. Such a V map can be represented as an image where pixels having pixel values corresponding to the frequency f are distributed on the two-dimensional orthogonal coordinate system.

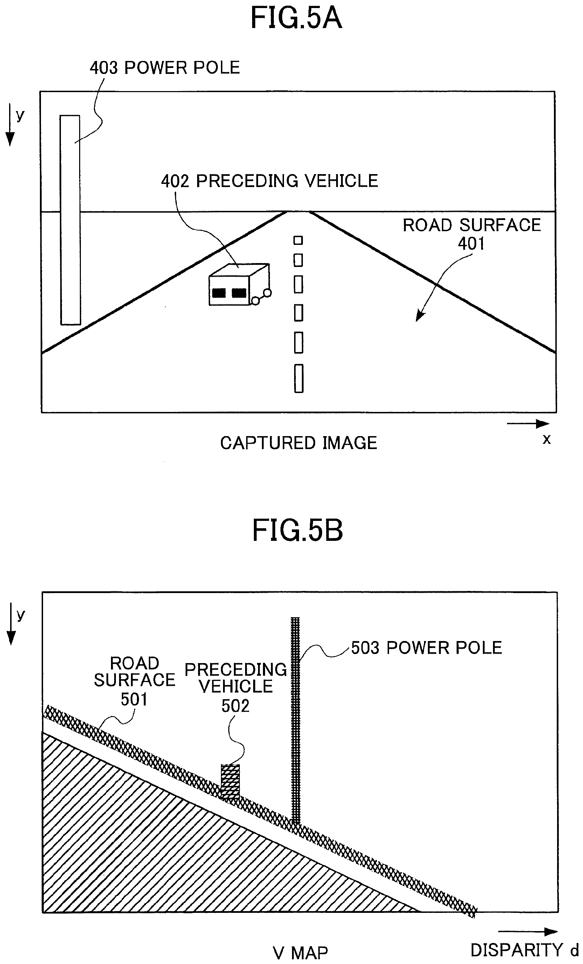

FIG. 5A illustrates an image example of a captured image serving as a reference image that has been captured by one of the imaging units. FIG. 5B is a V map corresponding to the captured image of FIG. 5A. Here, FIG. 5A illustrates the captured image, and FIG. 5B illustrates the V map. That is to say, from the captured image illustrated in FIG. 5A, the V map illustrated in FIG. 5B is generated. In the V map, no disparity is detected below the road surface, and hence no disparity is counted in an area A indicated by diagonal lines.

In the image example illustrated in FIG. 5A, a road surface 401 on which a vehicle is travelling, a preceding vehicle 402 present ahead of the vehicle, and a power pole 403 present outside of the road are displayed. In the V map illustrated in FIG. 5B, a road surface 501, a preceding vehicle 502, and a power pole 503 corresponding to those in the image example are illustrated.

The image example illustrates a case where the road surface ahead of the vehicle is a relatively planar one, that is, the road surface ahead of the vehicle matches an imaginary reference road surface (an imaginary reference surface to be travelled) obtained by extending a plane parallel with a road surface part immediately below the vehicle in a direction ahead of the vehicle. In such a case, in a lower part in the V map corresponding to a lower part in the image, points with high frequencies are distributed in a shape of a substantially straight line having an inclination such that as the substantially straight line becomes closer to the top of the image, the disparity values d become smaller. Pixels conforming to such a distribution can be said to be present at approximately identical distances in each line and to occupy the largest proportion in the disparity image. Additionally, the pixels can be considered to reflect a recognition target such that as the recognition target approaches the top of the image, the distance becomes longer in a continuous manner.

The imaging unit 510a is configured to capture images of areas ahead of the vehicle. Hence, with regard to contents in the captured images, as illustrated in FIG.

5A, as pixels that approaches the top of an image, the disparity values d on the road surface become smaller. In the same line (the horizontal line), the pixels reflecting the road surface have approximately identical disparity values d. Hence, in the V map, the points with high frequencies that are distributed in a shape of a substantially straight line correspond to characteristics of the pixels reflecting the road surface (the surface to be travelled). Therefore, pixels of points distributed on an approximate straight line that is obtained by linearly approximating points that are high in frequency in the V map or points in the vicinity of the approximate straight line are estimated with high accuracy to be pixels reflecting the road surface. Additionally, the distance to a road surface part reflected in each pixel is calculated with high accuracy from the disparity value d of a corresponding point on the approximate straight line.

<V map Generating Process in First Embodiment>

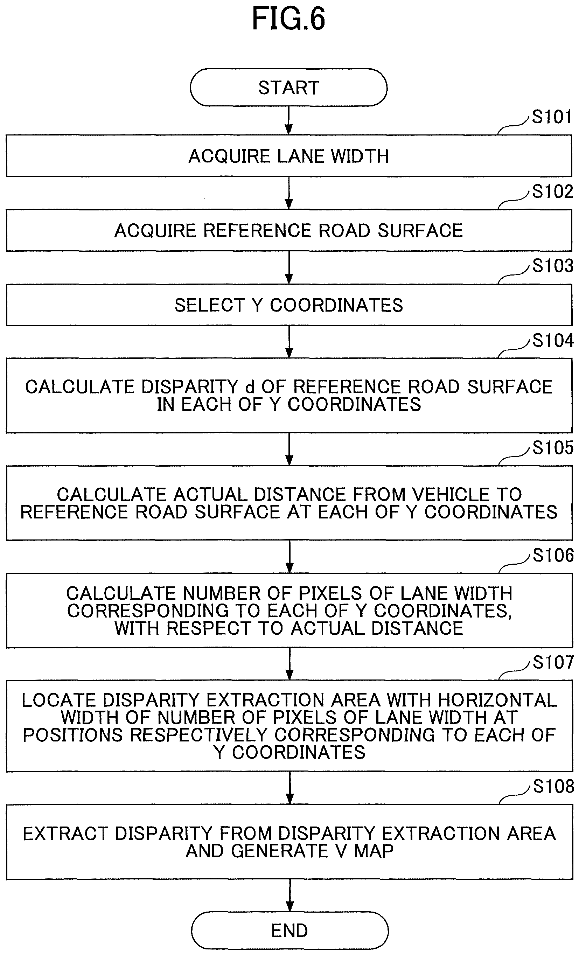

Next, with reference to FIG. 6, a V map generating process in a first embodiment will be described. FIG. 6 is a flowchart illustrating one example of the V map generating process in the first embodiment.

In step S101, the calculating unit 121 acquires a width of a traffic lane.

A predefined value of the width of the traffic lane (e.g., 3.5 m) may be used. Alternatively, the width of the traffic lane based on current positional information acquired through Global Positioning System (GPS) may be acquired from a map database. Alternatively, by utilizing Vehicle Information and Communication System (VICS) (registered trademark), the width of the traffic lane along which the vehicle is currently travelling may be acquired. Alternatively, white lines on both sides of the traffic lane may be detected to calculate the traffic lane width based on a reference road surface to be described later and a width between the white lines on both sides of the traffic lane.

Subsequently, the calculating unit 121 acquires the reference road surface (step S102).

For the reference road surface, for example, a predefined plane road surface (a default road surface) may be used. In such a case, by setting the reference road surface beforehand in consideration of, for example, a camera installed height or a pitching angle, calibration (adjustment) for each vehicle in which the camera is installed may be eliminated.

A road surface (a history road surface) estimated using a frame of a previously acquired disparity image is set as the reference road surface. In such a case, for example, the road surface that has been estimated using the most recent frame may be used. Alternatively, a combined road surface obtained by averaging several previous frames of the history road surface is used.

In a case of averaging several previous frames of the history road surface, for example, inclinations and intercepts in several frames of the history road surfaces may be respectively averaged. In such a case, a road surface shape detecting unit 133 to be described later may weigh the frames in accordance with reliability (a correlation coefficient) when estimating the road surface through linear approximation, and may calculate the average of the history road surfaces.

In the case of using the history road surface as the reference road surface, for example, a road surface sloping up or down is estimated in a more appropriate manner. Additionally, by averaging results of several frames, an influence given by a case where a road surface is erroneously estimated is reduced.

Subsequently, the calculating unit 121 selects a plurality of y coordinates in the disparity image (step S103). For example, the y coordinates may be set at equal intervals. Alternatively, as the distance from the vehicle is longer, an actual distance between pixels in the disparity image becomes longer. Hence, as the pixel becomes closer to the top (vertically upward, higher in a height direction) in the disparity image, the y coordinates may be set at smaller intervals.

Subsequently, the calculating unit 121 calculates a disparity d in the reference road surface for each of the plurality of y coordinates (step S104). Note that a reference road surface serves as a function of a y coordinate and a disparity d in a V map.

Subsequently, the calculating unit 121 calculates an actual distance from the vehicle to the reference road surface for each of the plurality of y coordinates, using each of the disparities d that have been calculated (step S105).

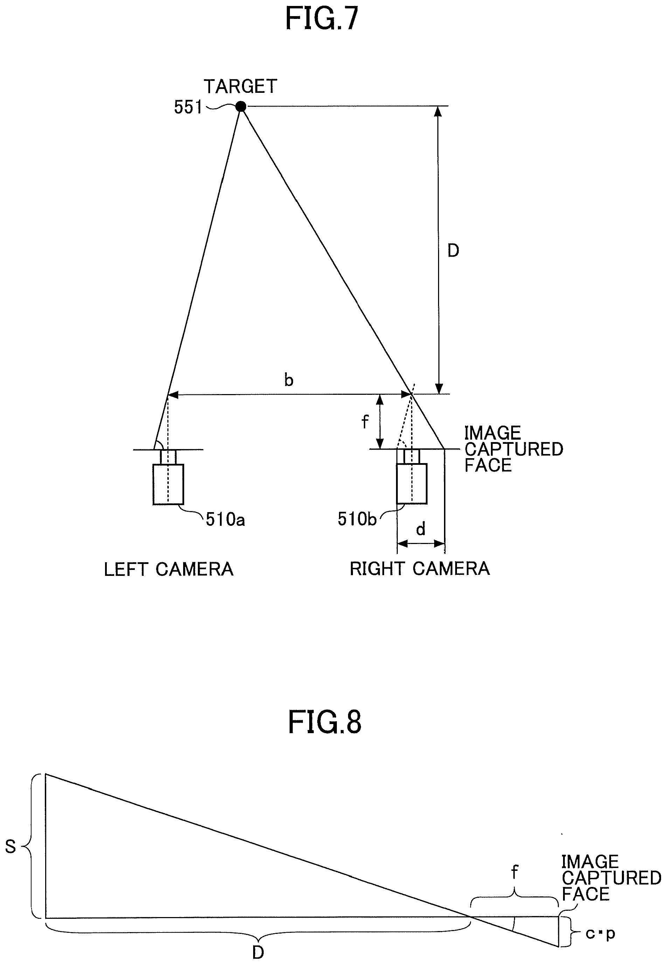

FIG. 7 is a diagram illustrating a calculation method for calculating an actual distance. An actual distance D from the right and left imaging units (cameras) 510a and 510b to a target 551 can be calculated by the following formula using a disparity d, which is a displacement amount between image-captured faces of the right and left cameras with respect to an identical target, a baseline length b, which is a space between the right and left cameras, and a focal point distance f of the right and left cameras.

$$D = b \times f / d \ \dots \ (1)$$

This is because b:d = D:f is satisfied.

In the above-described disparity image generating process, the disparity d is previously calculated. The baseline length b and the focal point distance f are values specific to a stereo camera, and thus can be predefined, for example, when the stereo camera is installed in a vehicle.

Subsequently, the calculating unit 121 calculates the number of pixels of a traffic lane width corresponding to each of the plurality of y coordinates, with respect to each of the actual distances.

FIG. 8 is a diagram illustrating a relationship between an actual distance and number of pixels.

In a disparity image, the number of pixels p (pix) of a traffic lane width s (mm) in a given actual distance D (mm) can be calculated in the following formula where f is a focal point distance and c is a sensor space (mm/pix).

$$p = s \times f/(c \times D) \ldots (2)$$

This is because $s:D = c \times p:f$ is satisfied.

Subsequently, the setting unit 122 locates a disparity extraction area having a horizontal width that is the number of pixels of the traffic lane width and that corresponds to each of the plurality of y coordinates, at each of positions respectively corresponding to the plurality of y coordinates (step S107).

Subsequently, the generating unit 123 extracts disparities from the disparity extraction areas, and generates a V map (step S108).

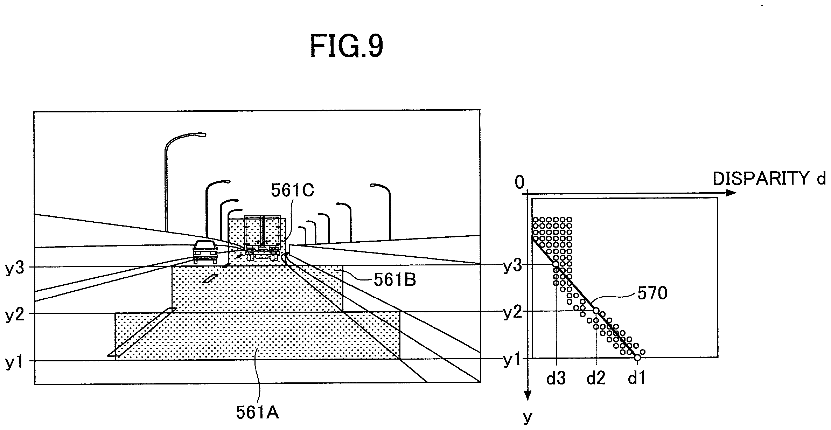

FIG. 9 illustrates an image example of the captured image as a reference image that has been captured by one of the imaging units, and also illustrates a V map of a given area corresponding to the captured image.

In the example of FIG. 9, in step S103, a plurality of y coordinates y1, y2, and y3 are selected. In step S104, disparities d1, d2, and d3 of a reference road surface 570 respectively corresponding to the y coordinates y1, y2, and y3 are calculated.

The V map generating unit 12 may locate the disparity extraction areas such that, for example, as illustrated in FIG. 9, the centers of the traffic lane widths agree with the center of the image in the horizontal direction.

In FIG. 9, one example of setting three disparity extraction areas 561A, 561B, and 561C is illustrated. The number of disparity extraction areas is not necessarily limited to three. For example, more than three disparity extraction areas or less than three disparity extraction areas may also be arranged.

In a case of setting a large number of disparity extraction areas, the shape formed by piling up the disparity extraction areas becomes similar to a trapezoid, thus making it easier to recognize the road surface shape. Vertical widths of the respective disparity extraction areas may be set, such that the disparity extraction areas are continuous with each other, such that the disparity extraction areas are not continuous with each other by vertically including a gap between the disparity extraction areas, or such that the disparity extraction areas overlap each other.

In FIG. 9, one example of selecting, in step S103, a y-coordinate at a bottom end in each of the disparity extraction areas is illustrated. However, a y-coordinate at a top end in each of the disparity extraction areas may also be selected, or a y-coordinate between the top end and the bottom end in each of the disparity extraction areas may also be selected.

Therefore, the above-described V map generating process in the first embodiment enables an improvement in accuracy of detecting a road surface.

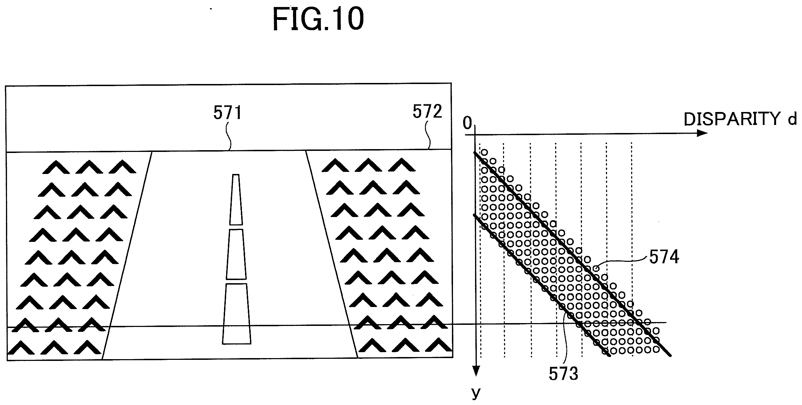

FIG. 10 is a diagram illustrating a case where disparities are extracted from the entire area in a disparity image to generate a V map.

When extracting a disparity on a road surface from a disparity image, an area where the road surface is displayed needs to be recognized correctly. In the above-described related art, such an area where the road surface is displayed cannot be recognized correctly.

For this reason, in a road surface estimating process to be described later, a case of detecting a road surface based on a most frequently occurring point that is highest in disparity frequency in a V map is considered. In a case where a traffic lane 571 is located higher than an embankment 572, that is, in a case where a distance from a camera to a road surface is shorter than a distance from the camera to the embankment, disparities extracted from the embankment are projected (distributed) on the left side in the V map, as compared to the disparities extracted relative to the road surface. Accordingly, a road surface 573 estimated using the disparities projected on the left side is lower than an actual road surface 574. In such a case, the disparities of the road surface might be erroneously recognized as an object present on the road surface, and might become a cause of an error alarm or error braking.

<Variation in Setting Disparity Extraction Area>

Regarding a y-coordinate at a left edge on the reference road surface where the disparity d=0 in the V map (a y-coordinate at an end point), in a case where the reference road surface is correct, such a y-coordinate is located near a vanishing point in the disparity image.

Therefore, in the road surface estimation, the disparity extraction area does not need to be set above the coordinate of the vanishing point.

For this reason, an upper limit position on the y-coordinate in the disparity extraction area may be set at the vanishing point or below. Alternatively, for a case where the reference road surface is not correct and the reference road surface is lower than the actual road surface, the upper limit position of the y-coordinate in the disparity extraction area may take a value obtained by adding a given offset to the y-coordinate at the vanishing point or less than such a value.

This reduces a likelihood of estimating a road surface in accordance with a frequency of a disparity extracted from an area where there is no disparity on a road surface.

<Road Surface Estimation>

A road surface estimating unit 13 estimates (detects) a road surface based on the disparity image generated by the disparity image generating unit 11.

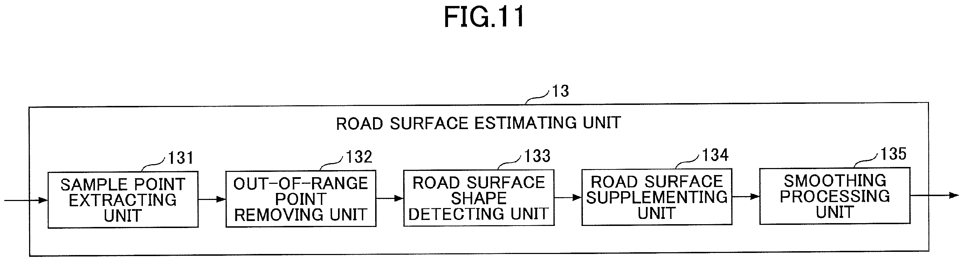

Next, with reference to FIG. 11, one example of a functional configuration of the road surface estimating unit 13 will be described. FIG. 11 is a functional block diagram illustrating one example of the road surface estimating unit 13.

The road surface estimating unit 13 includes a sample point extracting unit 131, an out-of-range point removing unit 132, a road surface shape detecting unit 133, a road surface supplementing unit 134, a smoothing processing unit 135, a road surface determining unit 136, and the road surface height table calculating unit 15.

Hereinafter, processes performed by the functional units of the road surface estimating unit 13 will be described.

<Sample Point Extracting Process>

The sample point extracting unit 131 extracts one or more sample points used for estimating a road surface from the V map generated by the V map generating unit 12.

Note that in the following, a description will be given of one example where a V map is divided into a plurality of segments according to a disparity value (a distance value from a vehicle) to perform a sample point extracting process and a road surface shape detecting process. However, the sample point extracting process or the road surface shape detecting process may be performed without dividing a V map.

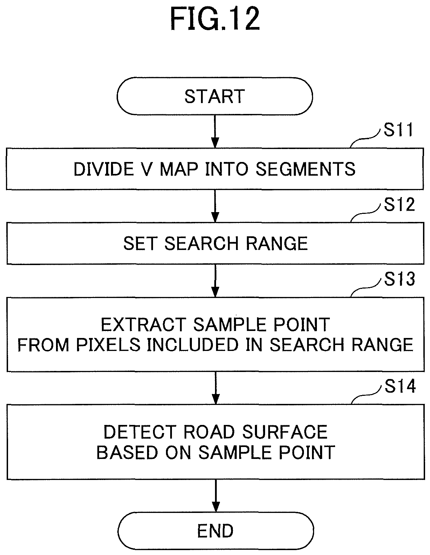

Next, with reference to FIG. 12, a detailed example of the sample point extracting process performed by the sample point extracting unit 131 will be described. FIG. 12 is a flowchart illustrating one example of the sample point extracting process.

First, the sample point extracting unit 131 divides a V map into a plurality of segments according to disparity values on a horizontal axis of the V map (step S11).

Subsequently, the sample point extracting unit 131 sets a range (a search range), in which sample points to be extracted are searched for, according to the disparity values on a horizontal axis of the V map (step S12). The sample point extracting unit 131 may set a search area to a rectangular area, for example.

Next, the sample point extracting unit 131 extracts one or more sample points from pixels included in the search range (step S13). The sample point extracting unit 131 may extract one or more sample points for each coordinate position of each of the disparity values d from the pixels included in the search range. Alternatively, the sample point extracting unit 131 may extract a most frequently occurring point that is highest in frequency, as a sample point, at the coordinate position of each of the disparity values d from the pixels included in the search range. Alternatively, the sample point extracting unit 131 may extract one or more most frequently occurring points, as sample points, at a plurality of coordinate positions including the disparity values d (e.g., a coordinate position of each disparity value d and at least one coordinate position on the right side or on the left side of the disparity value d) from the pixels included in the search range.

Subsequently, the out-of-range point removing unit 132, the road surface shape detecting unit 133, and the road surface supplementing unit 134 detect the road surface in a segment including the sample point, according to the sample point extracted in step S13 (step S14).

<Out-of-range Point Removing Process>

The out-of-range point removing unit 132 removes any point that is not suited for linear approximation from the sample points extracted by the sample point extracting unit 131.

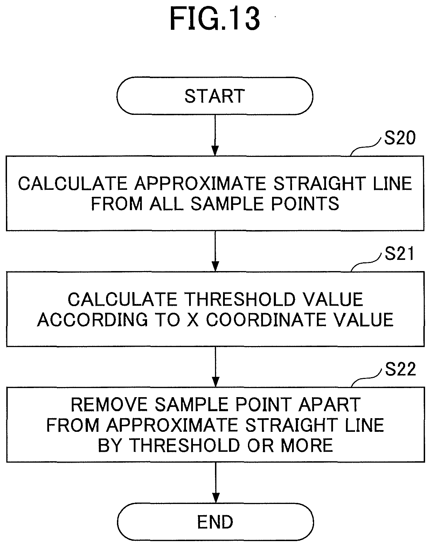

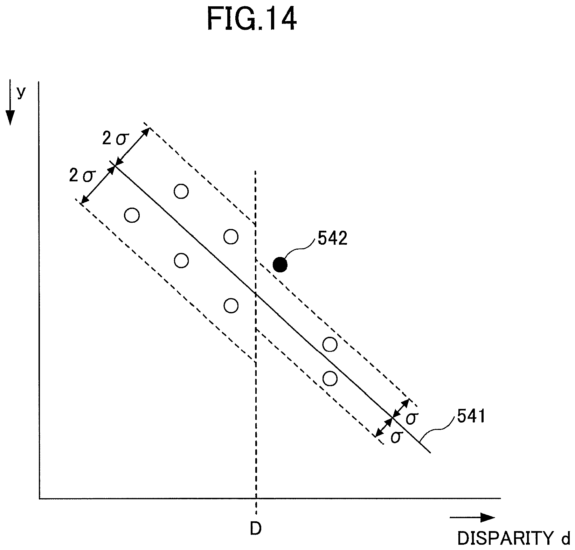

Referring to FIG. 13 and FIG. 14, an out-of-range point removing process performed by the out-of-range point removing unit 132 will be described. FIG. 13 is a flowchart illustrating one example of the out-of-range point removing process. FIG. 14 is a diagram illustrating the out-of-range point removing process.

First, the out-of-range point removing unit 132 calculates an approximate straight line using the sample points in the segments extracted by the sample point extracting unit 131 or the sample points in all segments (step S20). The out-of-range point removing unit 132 calculates the approximate straight line using a least squares technique, for example. In the example of FIG. 14, an approximate straight line 541 is calculated in step S20 of FIG. 13.

Subsequently, the out-of-range point removing unit 132 calculates a threshold value corresponding to an x-coordinate value (step S21). In the example of FIG. 14, a boundary is set to a value D at a given x-coordinate (e.g., a disparity value corresponding to a distance of 50 m from a vehicle). A given threshold value smaller than the value D (longer than a given distance from the vehicle) is set to $2\sigma$, and a given threshold value equal to or larger than the value D (equal to or shorter than the given distance from the vehicle) is set to $\sigma$. Such settings are made to loosely set a threshold value for removing the points, because the road surface having a smaller disparity value, that is, the road surface at a position having a longer distance from the vehicle has a larger error in measuring using a stereo camera.

Subsequently, the out-of-range point removing unit 132 removes a sample point that is apart in distance from the calculated approximate straight line by the threshold value calculated in step S21 or more (step S22). In the example of FIG. 14, the out-of-range point removing unit 132 removes a sample point 542, which has a larger value than the value D and which is apart by equal to or more than the threshold value $\sigma$. Note that a Euclidean distance or Mahalanobis' generalized distance may be used as a distance.

<Road Surface Shape Detecting Process>

The road surface shape detecting unit 133 detects the shape (position and height) of the road surface based on the sample points that have been extracted by the sample point extracting unit 131 and that have not been removed by the out-of-range point removing unit 132, from the segments in the V map that have been generated by the V map generating unit 12.

The road surface shape detecting unit 133 calculates an approximation straight line using the sample points in respective segments, for example, in a least squares method, and detects (estimates) the approximation straight line that has been calculated, as a road surface.

<Road Surface Supplementing Process>

The road surface supplementing unit 134 determines whether the road surface that has been detected (estimated) by the road surface shape detecting unit 133 or the road surface selected by a road surface determining unit 14 to be described below is valid or invalid. When determining that it is invalid, the road surface supplementing unit 134 supplements the road surface.

The road surface supplementing unit 134 determines whether an invalid road surface that cannot have been captured by a stereo camera due to noise has been estimated. When determining that the invalid road surface has been estimated, the road surface supplementing unit 134 supplements (interpolates) such an invalid road surface using data of a default road surface or the road surface that has been estimated in a previous frame.

For example, in a V map, when data of a road surface having a sharp inclination to the lower left (the upper right being high) with a partial gradient of a given value or more, the road surface supplementing unit 134 determines that the road surface is sloping down and a gradient becomes sharper in accordance with a longer distance from a vehicle. Then, the road surface supplementing unit 134 removes the data of such a road surface, and instead, supplements the data with the default road surface or the like.

<Smoothing Process>

The smoothing processing unit 135 modifies each road surface that has been estimated in each segment, so that the road surfaces become continuous with each other. The smoothing processing unit 135 changes inclinations and intercepts of the road surfaces such that in the road surfaces that have been estimated for adjacent two segments, an end point (a terminal point) of one of the road surfaces and a start point (another terminal point) of the other one of the road surfaces fit together.

<Road Surface Height Table Calculating Process>

The road surface height table calculating unit 15 performs a road surface height table calculating process, by calculating a road surface height (a relative height to a road surface part immediately below the vehicle) in accordance with the road surface in the segments that have been modified by the smoothing processing unit 135, and generating a table including road surface heights.

The road surface height table calculating unit 15 calculates a distance to a road surface part that is reflected in each line area in a captured image (each vertical position in the image), from the information of the road surface in each segment. Note that regarding an imaginary plane extending frontward in the vehicle travelling direction to be parallel with a road surface part located immediately below the vehicle, the line area in the captured image, on which each plane portion of such an imaginary plane extending in the vehicle travelling direction is reflected, is predetermined, and such an imaginary plane (a reference road surface) is represented by a straight line (a reference straight line) in a V map. The road surface height table calculating unit 15 compares the road surface in each segment with the reference straight line, and is capable of obtaining the height of each road surface part ahead of the vehicle. For simplification, from a Y axis position on the road surface in each segment, the road surface height table calculating unit 15 is capable of calculating the height of the road surface part present ahead of the vehicle only for a distance obtained from the disparity value corresponding to the Y axis position. The road surface height table calculating unit 15 generates a table including a needed disparity range of the heights of the road surface parts to be available from the approximation straight line.

Note that regarding a certain disparity value d, the height from a road surface of an object reflected on an image-captured portion corresponding to a certain point where y' is a Y axis position can be calculated by (y'-y0) where y0 is a Y axis position on the road surface in such a disparity value d. Generally, a height H from the road surface to an object corresponding to coordinates (d, y') in a V map can be calculated in the following expression. However, in the following expression, "z" is a distance (z = BF/(d-offset)) calculated from the disparity value d, and "f" is a value obtained by converting a focal distance of the camera into the same unit as the unit of (y'-y0). Here, "BF" is a value obtained by multiplying a baseline length of the stereo camera by the focal distance, and "offset" is a disparity value when an object at an infinite distance is image-captured.

$$H = z \times (y'-y0)/f$$

<Clustering, Discarding, and Tracking>

Regarding a set (x, y, d) including an x-direction position, a y-direction position, and a disparity value d in each of disparity pixel data included in the disparity image data, a clustering unit 16 sets x to the X axis, d to the Y axis, and a frequency to the Z axis to generate X-Y two-dimensional histogram information (a frequency U map).

The clustering unit 16 generates a frequency U map only for points (x, y, d) in the disparity image within a given height range (e.g., from 20 cm to 3 m) of a height H from the road surface in accordance with heights in the road surface parts that have been included in the table by the road surface height table calculating unit 15. In such a case, objects present within such a given height range from the road surface are extracted as valid.

The clustering unit 16, detects an area where the number of frequencies is larger than a given value and disparities are dense in the frequency U map, as an area of an object, and applies individual information such as a type of the object (such as a person or a pedestrian) predicted from coordinates in a disparity image or an actual size of the object.

A discarding unit 17 discards information of an object that is not a recognition target, according to the disparity image, the frequency U map, and the individual information of the object.

A tracking unit 18 determines whether a detected object is a target to be tracked, in a case where the detected object appears continuously in plurality of frames in the disparity image.

<Travel Support Control>

A control unit 19 performs travel support control, according to a detection result of an object by the clustering unit 16. The control unit 19, for example, gives an alarm to the driver of the vehicle 100 or controls the steering wheel or the brake of the vehicle.

<Second Embodiment>

In a second embodiment, one example of shifting a disparity extraction area to the right or left according to a curvature (a curve) of a road surface will be described. Note that because the second embodiment is similar to the first embodiment except one part, descriptions will be omitted as appropriate.

In the following, as for details of the in-vehicle apparatus control system 1 in the second embodiment, differences from the first embodiment will be described.

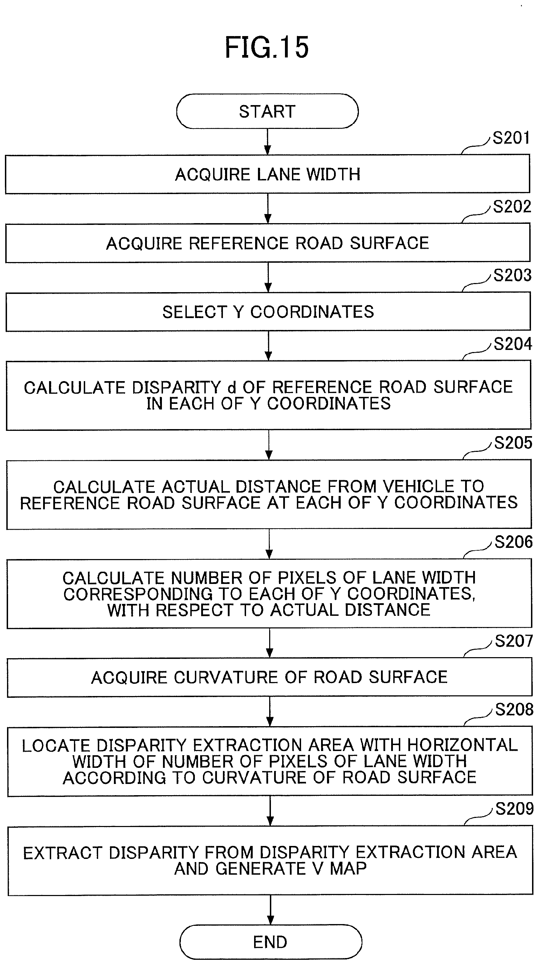

With reference to FIG. 15, a V map generating process in the second embodiment will be described. FIG. 15 is a flowchart illustrating one example of the V map generating process in the second embodiment.

Processes of step S201 to step S206 are identical to the processes of step S101 to step S106 of FIG. 6.

Subsequently, the calculating unit 121 acquires a curvature of the road surface (step S207).

The calculating unit 121 may calculate the curvature of the road surface, for example, using a steering angle (a steered angle of the steering wheel) acquired from Controller Area Network (CAN) through the data I/F 603.

Alternatively, the calculating unit 121 may acquire a curvature of a traffic lane according to current position information acquired through GPS from a map database. Alternatively, the calculating unit 121 may acquire the curvature of the traffic lane along which the vehicle is currently travelling, using Vehicle Information and Communication System (VICS).

Alternatively, the calculating unit 121 may calculate the curvature of the traffic lane, by performing image recognition of white lines of the traffic lane from captured image data that has been captured by the image capturing unit 500.

Subsequently, the setting unit 122 locates a disparity extraction area with a horizontal width corresponding to the number of pixels of the lane width based on the curvature of the road surface (step S208).

For example, in accordance with a radius gyration R of the traffic lane, the disparity extraction area may be set. Note that the radius gyration R of the traffic lane indicates that, for example, in a case of R = 100, the center line is a curve drawing a circle with a radius of 100 m. As the value of R is smaller, the curve becomes sharper.

When the vehicle is approaching the curve, the value of radius gyration R of the traffic lane becomes smaller. For this reason, according to the value of radius gyration R of the traffic lane, the disparity extraction area is shifted in a direction of the curve.

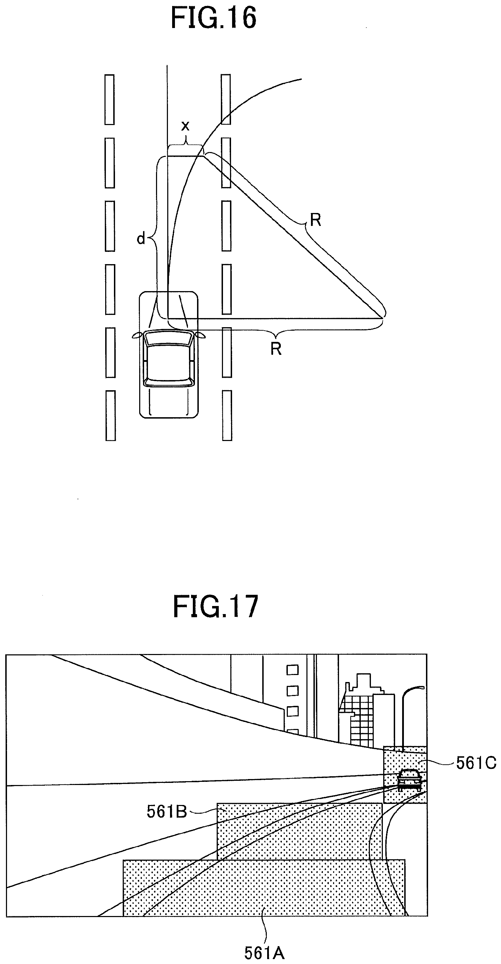

Next, with reference to FIG. 16, a description will be given of a method for calculating a horizontal shift amount x with respect to a predefined shift distance d of the vehicle, from the radius gyration R of the traffic lane. FIG. 16 is a diagram illustrating the method for calculating the horizontal shift amount x.

Regarding the predefined shift distance d and the shift amount x of the vehicle and the radius gyration R of the traffic lane, the following relationship is satisfied.

<Expression 1>

$$R^2 = (R - x)^2 + d^2$$

Therefore, the shift amount x can be calculated in the following expression.

<Expression 2>

$$x = R - \sqrt{R^2 - d^2}$$

Here, the distance d corresponds to a d coordinate on a V map with respect to a y coordinate of the disparity extraction area, in a case where the disparity extraction area is set in a disparity image.

In the disparity image, the number of pixels p (pix) of the shift amount x (mm) in a given actual distance D (mm) can be calculated in the following formula where f is a focal point distance and c is a sensor space (mm/pix), in a similar manner to the above-described formula (2) in the first embodiment.

$$p = x \times f/(c \times D) \ \dots \ (3)$$

The shift amount x is an actual distance, and is converted into the number of pixels in the formula (3).

From a center position in the disparity image, the number of pixels corresponding to the shift amount x is horizontally shifted. Note that in a case of a through lane and a stereo camera that is installed not to reflect the traffic lane at the center in the disparity image, the reference position may be set at any position.

Depending on the value of the shift amount x, the disparity extraction area that has been shifted extends outside from the disparity image, in some cases. In such cases, a portion extending outside may be removed from the disparity extraction area, or an upper limit may be provided for the disparity extraction area so that the disparity extraction area does not extend outside from the disparity image.

FIG. 17 is diagram illustrating one example of the disparity extraction area that has been shifted according to the value of the radius gyration R.

In FIG. 17, among three disparity extraction areas 561A, 561B, and 561C, the disparity extraction area 561C, which is the uppermost one, has been shifted the most.

Subsequently, the generating unit 123 extracts disparities from the disparity extraction areas, and generates a V map (step S209).

<Conclusion>

According to the embodiments as described above, a disparity image includes disparity values obtained from a plurality of captured images respectively captured by a plurality of image capturing units, and a distance to a road surface corresponding to a vertical position in the disparity image is calculated using a reference road surface. Then, an area in the disparity image from which the disparity value is extracted is set according to the calculated distance and a traffic lane width on the road surface.

Hence, as a V map that is relatively less affected by disparities from any objects other than the road surface is generated, the accuracy in detecting a road surface is improved.

Note that since a value of a distance (a distance value) and a disparity value can be treated equally, a disparity image has been described as one example of a distance image, in one or more embodiments. However, there is no limitation to this. For example, a distance image may be generated by integrating distance information generated by a detecting apparatus, such as a millimeter wave radar or a laser radar with a disparity image generated by a stereo camera. Additionally, a stereo camera and a detecting apparatus, such as a millimeter wave radar or a laser radar may be used together to be combined with detection results of the above-described stereo camera, in order to achieve a configuration for further improving the detection accuracy.

The system configuration in the above-described embodiments is one example, and various system configuration examples depending on an application and an object are applicable. In addition, a part of or all of the above-described embodiments can be utilized together.

For example, the processes performed by the out-of-range point removing unit 132, the road surface supplementing unit 134, and the smoothing processing unit 135 may not necessarily be included. Therefore, a configuration that does not include such functional units may be applicable.

Further, functional units of the processing hardware unit 510, the image analyzing unit 600, and the vehicle travel controlling unit 104 may be configured to be enabled by a hardware configuration, or may be configured to be enabled by the CPU running a program stored in a memory device. Such a program may be recorded and distributed in a computer-readable recording medium, in an installable format or in an executable format. Moreover, as examples of the recording medium, Compact Disc Recordable (CD-R), Digital Versatile Disk (DVD), and Blu-ray Disc, can be mentioned. Additionally, a recording medium such as a CD-ROM in which each program is stored and an HD 504 in which programs are stored can be supplied as a program product domestically or overseas.

**Claims**

1. An image processing apparatus comprising:

   a calculating unit (121) configured to calculate a distance from a plurality of image capturing units (500) to a reference road surface for each of a plurality of y coordinates selected in a disparity image, wherein the calculation of the respective distance is done by using the disparity in the reference road surface calculated for the respective y coordinate,

wherein the disparity image includes disparity values obtained from a plurality of captured images respectively captured by the plurality of image capturing units (500), wherein the calculating unit is further configured to calculate the number of pixels of a traffic lane width corresponding to each of the plurality of y coordinates, with respect to the respective distance;

a setting unit (122) configured to, for each of the plurality of distances, set an area in the disparity image from which at least one of the plurality of disparity values is extracted, wherein the setting of the area is done according to a respective distance of the plurality of distances that has been calculated by the calculating unit (121) and a width of a lane on the road surface, wherein the area has a horizontal width that is the number of pixels of the traffic lane width that corresponds to the respective y coordinate;
a generating unit (123) configured to generate a v-disparity map for indicating frequency distribution of disparity values in the disparity image, according to the disparity values extracted from the areas in the disparity image that have been set by the setting unit (122); and
an estimating unit (13) configured to estimate a road surface based on the v-disparity map, wherein
the reference road surface includes a road surface that has been estimated by the estimating unit (13) using a disparity image obtained from a second plurality of captured images that have previously been captured by the plurality of image capturing units (500), respectively.

2. The image processing apparatus according to claim 1, wherein the setting unit (122) sets the width of the area that corresponds to the width of the lane on the road surface using the number of pixels in the disparity image corresponding to the distance from the plurality of image capturing units (500) to the reference road surface that has been calculated by the calculating unit (121).

3. The image processing apparatus according to any one of claim 1 to claim 2, wherein the setting unit (122) sets a vertical upper limit position of the area in the disparity image, according to a vanishing point in the disparity image.

4. The image processing apparatus according to any one of claim 1 to claim 3, wherein the setting unit (122) sets a horizontal position of the area in the disparity image according to a curvature of the lane.

5. The image processing apparatus according to claim 4, wherein the setting unit (122) sets the horizontal position of the area in the disparity image to correspond to a horizontal shift amount of the lane based on the curvature, using the number of pixels in the disparity image corresponding to the distance from the plurality of image capturing units (500) to the road surface that has been calculated by the calculating unit (121).

6. An image capturing apparatus comprising the image processing apparatus of any one preceding claim, and further comprising:

a plurality of image capturing units (500); and
a distance image generating unit (123) configured to generate a distance image including a distance value corresponding to a disparity on an object between the plurality of image capturing units (500), from a plurality of captured images respectively captured by the plurality of image capturing units (500).

7. A moving body apparatus control system comprising the image processing apparatus of any one preceding claim, wherein

the calculating unit (121) is configured to calculate a distance from the plurality of image capturing units (500) to a reference surface to be travelled for each of a plurality of y coordinates selected in a disparity image, wherein the calculation of the respective distance is done by using the disparity in the reference road surface calculated for the respective y coordinate, wherein the disparity image includes disparity values obtained from a plurality of captured images respectively captured by the plurality of image capturing units (500), wherein the calculating unit is further configured to calculate the number of pixels of a traffic lane width corresponding to each of the plurality of y coordinates, with respect to the respective distance,
and the setting unit is configured to, for each of the plurality of distances, set an area in the disparity image from which at least one of the plurality of disparity values is extracted, wherein the setting of the area is done according to a respective distance of the plurality of distances that has been calculated by the calculating unit (121) and a width of a lane on the surface to be travelled, wherein the area has a horizontal width that is the number of pixels of the lane width that corresponds to the respective y coordinate; and further comprising:

a plurality of image capturing units (500) mounted in a moving body (100), and configured to capture a plurality of images that are ahead of the moving body (100);

a disparity image generating unit (123) configured to generate a disparity image including a plurality of disparity values, each of the plurality of disparity values corresponding to a disparity on an object between the plurality of image capturing units (500), from the plurality of captured images respectively captured by the plurality of image capturing units (500);

an object detecting unit (16) configured to detect an object in the plurality of captured images, according to the surface to be travelled and the disparity image; and

a control unit (19) configured to control the moving body (100) according to data that has been detected by the object detecting unit (16).

8. An image processing method for causing a computer to perform steps of:

calculating (S105) a distance from a plurality of image capturing units (500) to a reference road surface for each of a plurality of y coordinates selected in a disparity image, wherein the calculation of the respective distance is done by using the disparity in the reference road surface calculated for the respective y coordinate, wherein the disparity image includes disparity values obtained from a plurality of captured images respectively captured by the plurality of image capturing units (500), wherein the calculating unit is further configured to calculate the number of pixels of a traffic lane width corresponding to each of the plurality of y coordinates, with respect to the respective distance;

for each of the plurality of distances, setting (S107) an area in the disparity image from which at least one of the plurality of disparity values is extracted, wherein the setting of the area is done according to a respective distance of the plurality of distances that has been calculated by the calculating step and a width of a lane on the road surface, wherein the area has a horizontal width that is the number of pixels of the traffic lane width that corresponds to the respective y coordinate;

generating (S108) a v-disparity map for indicating frequency distribution of disparity values in the disparity image, according to the disparity values extracted from the areas in the disparity image that has been set by the setting step; and estimating a road surface based on the v-disparity map, wherein

the reference road surface includes a road surface that has been estimated by the estimating unit (13) using a disparity image obtained from a plurality of captured images that have previously been captured by the plurality of image capturing units (500), respectively.

9. A program for causing a computer to perform the method of claim 8.

**Patentansprüche**

1. Bildverarbeitungsvorrichtung, die Folgendes umfasst:

eine Berechnungseinheit (121), die so konfiguriert ist, dass eine Entfernung von einer Vielzahl von Bilderfassungseinheiten (500) zu einer Bezugsstraßenoberfläche für jede einer Vielzahl von y-Koordinaten berechnet wird, die in einem Disparitätsbild ausgewählt werden, wobei die Berechnung der jeweiligen Entfernung unter Verwendung der Disparität an der Bezugsstraßenoberfläche, die für die jeweilige y-Koordinate berechnet wird, erfolgt,

wobei das Disparitätsbild Disparitätswerte einschließt, die aus einer Vielzahl von erfassten Bildern erhalten werden, die jeweils von der Vielzahl von Bilderfassungseinheiten (500) erfasst werden,

wobei die Berechnungseinheit ferner so konfiguriert ist, dass sie die Anzahl von Pixeln einer Fahrspurbreite, die jeder der Vielzahl von y-Koordinaten entspricht, in Bezug auf die jeweilige Entfernung berechnet;

eine Einstellungseinheit (122), die so konfiguriert ist, dass sie für jede der Vielzahl von Entfernungen einen Bereich in dem Disparitätsbild einstellt, aus dem mindestens einer der Vielzahl von Disparitätswerten extrahiert wird, wobei die Einstellung des Bereichs gemäß einer jeweiligen Entfernung der Vielzahl von Entfernungen, die von der Berechnungseinheit (121) berechnet worden ist, und einer Breite einer Spur auf der Straßenoberfläche erfolgt, wobei der Bereich eine horizontale Breite aufweist, die die Anzahl von Pixeln der Fahrspurbreite ist, die der jeweiligen y-Koordinate entspricht,

eine Generierungseinheit (123), die so konfiguriert ist, dass sie eine v-Disparitätskarte zum Anzeigen einer Häufigkeitsverteilung von Disparitätswerten in dem Disparitätsbild gemäß den Disparitätswerten generiert, die aus den durch die Einstellungseinheit (122) eingestellten Bereichen in dem Disparitätsbild extrahiert wurden; und

eine Schätzeinheit (13), die so konfiguriert ist, dass sie eine Straßenoberfläche auf der Grundlage der v-Disparitätskarte schätzt, wobei die Bezugsstraßenoberfläche eine Straßenoberfläche einschließt, die von der Schätzeinheit (13) unter Verwendung eines Disparitätsbildes geschätzt wurde, das aus einer zweiten Vielzahl von erfassten Bildern erhalten wird, die jeweils zuvor von der Vielzahl von Bilderfassungseinheiten (500) erfasst wurden.

2. Bildverarbeitungsvorrichtung nach Anspruch 1, wobei die Einstellungseinheit (122) die Breite des Bereichs einstellt, der der Breite der Spur auf der Straßenoberfläche entspricht, unter Verwendung der Anzahl von Pixeln in dem Disparitätsbild, die der Entfernung von der Vielzahl von Bilderfassungseinheiten (500) zu der Referenzstraßenoberfläche entspricht, die von der Berechnungseinheit (121) berechnet wurde.

3. Bildverarbeitungsvorrichtung nach einem der Ansprüche 1 bis 2, wobei die Einstellungseinheit (122) eine vertikale obere Grenzposition des Bereichs in dem Disparitätsbild gemäß einem Fluchtpunkt in dem Disparitätsbild einstellt.

4. Bildverarbeitungsvorrichtung nach einem der Ansprüche 1 bis 3, wobei die Einstellungseinheit (122) eine horizontale Position des Bereichs in dem Disparitätsbild gemäß einer Krümmung der Spur einstellt.

5. Bildverarbeitungsvorrichtung nach Anspruch 4, wobei die Einstellungseinheit (122) die horizontale Position des Bereichs in dem Disparitätsbild so einstellt, dass sie einem horizontalen Verschiebungsbetrag der Spur auf der Grundlage der Krümmung entspricht, unter Verwendung der Anzahl von Pixeln in dem Disparitätsbild, die der Entfernung von der Vielzahl von Bilderfassungseinheiten (500) zu der Straßenoberfläche entspricht, die von der Berechnungseinheit (121) berechnet wurde.

6. Bilderfassungsvorrichtung, die die Bildverarbeitungsvorrichtung nach einem der vorhergehenden Ansprüche umfasst und ferner Folgendes umfasst:

   eine Vielzahl von Bilderfassungseinheiten (500); und
   eine Entfernungsbildgenerierungseinheit (123), die so konfiguriert ist, dass sie ein Entfernungsbild einschließlich eines Entfernungswerts generiert, der einer Disparität an einem Objekt zwischen der Vielzahl von Bilderfassungseinheiten (500) entspricht, ausgehend von einer Vielzahl von erfassten Bildern, die jeweils von der Vielzahl von Bilderfassungseinheiten (500) erfasst werden.

7. Steuersystem für eine Vorrichtung mit beweglichem Körper, die die Bildverarbeitungsvorrichtung nach einem der vorhergehenden Ansprüche umfasst, wobei

   die Berechnungseinheit (121) so konfiguriert ist, dass eine Entfernung von der Vielzahl von Bilderfassungseinheiten (500) zu einer zu befahrenden Bezugsoberfläche für jede einer Vielzahl von y-Koordinaten berechnet wird, die in einem Disparitätsbild ausgewählt werden, wobei die Berechnung der jeweiligen Entfernung unter Verwendung der Disparität an der Referenzstraßenoberfläche erfolgt, die für die jeweilige y-Koordinate berechnet wird, wobei das Disparitätsbild Disparitätswerte einschließt, die aus einer Vielzahl von erfassten Bildern erhalten werden, die jeweils von der Vielzahl von Bilderfassungseinheiten (500) erfasst werden, wobei die Berechnungseinheit ferner so konfiguriert ist, dass sie die Anzahl von Pixeln einer Fahrspurbreite, die jeder der Vielzahl von y-Koordinaten entspricht, in Bezug auf die jeweilige Entfernung berechnet,
   und die Einstellungseinheit so konfiguriert ist, dass sie für jede der Vielzahl von Entfernungen einen Bereich in dem Disparitätsbild einstellt, aus dem mindestens einer der Vielzahl von Disparitätswerten extrahiert wird, wobei das Einstellen des Bereichs gemäß einer jeweiligen Entfernung der Vielzahl von Entfernungen, die durch die Berechnungseinheit (121) berechnet wurde, und einer Breite einer Spur auf der zu befahrenden Oberfläche erfolgt, wobei der Bereich eine horizontale Breite aufweist, die die Anzahl von Pixeln der Spurbreite ist, die der jeweiligen y-Koordinate entspricht, und die ferner Folgendes umfasst:

   eine Vielzahl von Bilderfassungseinheiten (500), die in einem sich bewegenden Körper (100) montiert und so konfiguriert sind, dass sie eine Vielzahl von Bildern erfassen, die vor dem sich bewegenden Körper (100) liegen;
   eine Disparitätsbildgenerierungseinheit (123), die so konfiguriert ist, dass sie ein Disparitätsbild einschließlich einer Vielzahl von Disparitätswerten generiert, wobei jeder der Vielzahl von Disparitätswerten einer Disparität an einem Objekt zwischen der Vielzahl von Bilderfassungseinheiten (500) entspricht, aus der Vielzahl von erfassten Bildern, die jeweils von der Vielzahl von Bilderfassungseinheiten (500) erfasst werden,
   eine Objekterkennungseinheit (16), die so konfiguriert ist, dass sie ein Objekt in der Vielzahl von erfassten Bildern gemäß der zu befahrenden Oberfläche und dem Disparitätsbild erkennt; und

eine Steuereinheit (19), die so konfiguriert ist, dass sie den sich bewegenden Körper (100) gemäß Daten steuert, die von der Objekterkennungseinheit (16) erkannt wurden.

8. Bildverarbeitungsverfahren, um einen Computer zu veranlassen, folgende Schritte durchzuführen:

Berechnen (S105) einer Entfernung von einer Vielzahl von Bilderfassungseinheiten (500) zu einer Bezugsstraßenoberfläche für jede einer Vielzahl von y-Koordinaten, die in einem Disparitätsbild ausgewählt werden, wobei die Berechnung der jeweiligen Entfernung unter Verwendung der Disparität an der Bezugsstraßenoberfläche erfolgt, die für die jeweilige y-Koordinate berechnet wird, wobei das Disparitätsbild Disparitätswerte einschließt, die aus einer Vielzahl von erfassten Bildern erhalten werden, die jeweils von der Vielzahl von Bilderfassungseinheiten (500) erfasst werden, wobei die Berechnungseinheit ferner so konfiguriert ist, dass sie die Anzahl von Pixeln einer Fahrspurbreite, die jeder der Vielzahl von y-Koordinaten entspricht, in Bezug auf die jeweilige Entfernung berechnet; für jede der Vielzahl von Entfernungen, Einstellen (S107) eines Bereichs in dem Disparitätsbild, aus dem mindestens einer der Vielzahl von Disparitätswerten extrahiert wird, wobei das Einstellen des Bereichs gemäß einer jeweiligen Entfernung der Vielzahl von Entfernungen, die durch den Berechnungsschritt berechnet wurde, und einer Breite einer Spur auf der Straßenoberfläche erfolgt, wobei der Bereich eine horizontale Breite aufweist, die die Anzahl von Pixeln der Fahrspurbreite ist, die der jeweiligen y-Koordinate entspricht,

Generieren (S108) einer v-Disparitätskarte zum Anzeigen einer Häufigkeitsverteilung von Disparitätswerten in dem Disparitätsbild gemäß den Disparitätswerten, die aus den Bereichen in dem Disparitätsbild extrahiert werden, das durch den Einstellungsschritt eingestellt wurde, und

Schätzen einer Straßenoberfläche auf der Grundlage der v-Disparitätskarte, wobei die Bezugsstraßenoberfläche eine Straßenoberfläche einschließt, die von der Schätzeinheit (13) unter Verwendung eines Disparitätsbilds geschätzt wurde, das aus einer Vielzahl von erfassten Bildern erhalten wurde, die jeweils zuvor von der Vielzahl von Bilderfassungseinheiten (500) erfasst wurden.

9. Programm, um einen Computer zu veranlassen, das Verfahren nach Anspruch 8 durchzuführen.

## Revendications

1. Appareil de traitement d'image comprenant :

une unité de calcul (121) configurée pour calculer une distance à partir d'une pluralité d'unités de capture d'image (500) à une surface de route de référence pour chacune d'une pluralité de coordonnées y sélectionnées dans une image de disparité, dans laquelle le calcul de la distance respective est effectué en utilisant la disparité dans la surface de route de référence calculée pour la coordonnée y respective,

dans lequel l'image de disparité inclut des valeurs de disparité obtenues à partir d'une pluralité d'images capturées respectivement capturées par la pluralité d'unités de capture d'image (500),

dans lequel l'unité de calcul est en outre configurée pour calculer le nombre de pixels d'une largeur de voie de circulation correspondant à chacune de la pluralité de coordonnées y, par rapport à la distance respective ;

une unité de réglage (122) configurée pour, pour chacune de la pluralité de distances, régler une zone dans l'image de disparité à partir de laquelle au moins une de la pluralité de valeurs de disparité est extraite, dans laquelle le réglage de la zone est effectuée en fonction d'une distance respective de la pluralité de distances qui a été calculée par l'unité de calcul (121) et d'une largeur d'une voie sur la surface de route, dans laquelle la zone a une largeur horizontale égale au nombre de pixels de la largeur de voie de circulation qui correspond à la coordonnée y respective ;

une unité de génération (123) configurée pour générer une carte de disparité en v pour indiquer une distribution de fréquence de valeurs de disparité dans l'image de disparité, en fonction des valeurs de disparité extraites des zones dans l'image de disparité qui ont été réglées par l'unité de réglage (122) ; et

une unité d'estimation (13) configurée pour estimer une surface de route sur la base de la carte de disparité en v, dans laquelle

la surface de route de référence inclut une surface de route qui a été estimée par l'unité d'estimation (13) en utilisant une image de disparité obtenue à partir d'une deuxième pluralité d'images capturées qui ont été précédemment capturées par la pluralité d'unités de capture d'image (500), respectivement.

**2.** Appareil de traitement d'image selon la revendication 1, dans lequel l'unité de réglage (122) règle la largeur de la zone qui correspond à la largeur de la voie sur la surface de route en utilisant le nombre de pixels dans l'image de disparité correspondant à la distance à partir de la pluralité d'unités de capture d'image (500) à la surface de route de référence qui a été calculée par l'unité de calcul (121).

**3.** Appareil de traitement d'image selon l'une quelconque des revendications 1 à 2, dans lequel l'unité de réglage (122) règle une position de limite supérieure verticale de la zone dans l'image de disparité, en fonction d'un point de fuite dans l'image de disparité.

**4.** Appareil de traitement d'image selon l'une quelconque des revendications 1 à 3, dans lequel l'unité de réglage (122) règle une position horizontale de la zone dans l'image de disparité en fonction d'une courbure de la voie.

**5.** Appareil de traitement d'image selon la revendication 4, dans lequel l'unité de réglage (122) règle la position horizontale de la zone dans l'image de disparité de sorte qu'elle corresponde à un montant de décalage horizontal de la voie sur la base de la courbure, à l'aide du nombre de pixels dans l'image de disparité correspondant à la distance à partir de la pluralité d'unités de capture d'image (500) à la surface de route qui a été calculée par l'unité de calcul (121).

**6.** Appareil de capture d'image comprenant l'appareil de traitement d'image selon une revendication précédente quelconque, et comprenant en outre :

une pluralité d'unités de capture d'image (500) ; et
une unité de génération d'image de distance (123) configurée pour générer une image de distance incluant une valeur de distance correspondant à une disparité sur un objet entre la pluralité d'unités de capture d'image (500), à partir d'une pluralité d'images capturées respectivement capturées par la pluralité d'unités de capture d'image (500).

**7.** Système de commande d'appareil de corps mobile comprenant l'appareil de traitement d'image selon une revendication précédente quelconque, dans lequel

l'unité de calcul (121) est configurée pour calculer une distance à partir de la pluralité d'unités de capture d'image (500) à une surface de référence à parcourir pour chacune d'une pluralité de coordonnées y sélectionnées dans une image de disparité, dans laquelle le calcul de la distance respective est effectué en utilisant la disparité dans la surface de route de référence calculée pour la coordonnée y respective, dans laquelle l'image de disparité inclut des valeurs de disparité obtenues à partir d'une pluralité d'images capturées respectivement capturées par la pluralité d'unités de capture d'image (500), dans laquelle l'unité de calcul est en outre configurée pour calculer le nombre de pixels d'une largeur de voie de circulation correspondant à chacune de la pluralité de coordonnées y, par rapport à la distance respective,
et l'unité de réglage est configurée pour, pour chacune de la pluralité de distances, régler une zone dans l'image de disparité à partir de laquelle au moins une de la pluralité de valeurs de disparité est extraite, dans laquelle le réglage de la zone est effectuée en fonction d'une distance respective de la pluralité de distances qui a été calculée par l'unité de calcul (121) et d'une largeur d'une voie sur la surface à parcourir, dans laquelle la zone a une largeur horizontale égale au nombre de pixels de la largeur de voie qui correspond à la coordonnée y respective ;
et comprenant en outre :

une pluralité d'unités de capture d'image (500) montées dans un corps mobile (100) et configurées pour capturer une pluralité d'images qui se trouvent à l'avant du corps mobile (100) ;
une unité de génération d'image de disparité (123) configurée pour générer une image de disparité incluant une pluralité de valeurs de disparité, chacune de la pluralité de valeurs de disparité correspondant à une disparité sur un objet entre la pluralité d'unités de capture d'image (500), à partir de la pluralité d'images capturées respectivement capturées par la pluralité d'unités de capture d'image (500) ;
une unité de détection d'objet (16) configurée pour détecter un objet dans la pluralité d'images capturées, en fonction de la surface à parcourir et de l'image de disparité ; et
une unité de commande (19) configurée pour commander le corps mobile (100) en fonction de données qui ont été détectées par l'unité de détection d'objet (16).

**8.** Procédé de traitement d'image pour amener un ordinateur à réaliser les étapes suivantes :

le calcul (S105) d'une distance à partir d'une pluralité d'unités de capture d'image (500) à une surface de route de référence pour chacune d'une pluralité de coordonnées y sélectionnées dans une image de disparité, dans lequel le calcul de la distance respective est effectué en utilisant la disparité dans la surface de route de référence calculée pour la coordonnée y respective, dans lequel l'image de disparité inclut des valeurs de disparité obtenues à partir d'une pluralité d'images capturées respectivement capturées par la pluralité d'unités de capture d'image (500), dans lequel l'unité de calcul est en outre configurée pour calculer le nombre de pixels d'une largeur de voie de circulation correspondant à chacune de la pluralité de coordonnées y, par rapport à la distance respective ;

pour chacune de la pluralité de distances, le réglage (S107) d'une zone dans l'image de disparité à partir de laquelle au moins une de la pluralité de valeurs de disparité est extraite, dans lequel le réglage de la zone est effectuée en fonction d'une distance respective de la pluralité de distances qui a été calculée par l'étape de calcul et d'une largeur d'une voie sur la surface de route, dans lequel la zone a une largeur horizontale égale au nombre de pixels de la largeur de voie de circulation qui correspond à la coordonnée y respective ;

la génération (S 108) d'une carte de disparité en v pour indiquer une distribution de fréquence de valeurs de disparité dans l'image de disparité, en fonction des valeurs de disparité extraites à partir des zones dans l'image de disparité qui a été réglée par l'étape de réglage ; et

l'estimation d'une surface de route sur la base de la carte de disparité en v, dans lequel la surface de route de référence inclut une surface de route qui a été estimée par l'unité d'estimation (13) en utilisant une image de disparité obtenue à partir d'une pluralité d'images capturées qui ont été précédemment capturées par la pluralité d'unités de capture d'image (500), respectivement.

**9.** Programme pour amener un ordinateur à réaliser le procédé selon la revendication 8.

# FIG.1

EP 3 282 389 B1

# FIG.2

2

500

511a

513a
514a
510a

515a

511b

513b
514b
510b

515b

LUMINANCE
IMAGE DATA

LUMINANCE
IMAGE DATA

510

DISPARITY OPERATING
UNIT

511

DISPARITY IMAGE DATA

601

RAM, ROM

600

602

CPU

603

DATA I/F

604

SERIAL I/F

# FIG.3

EP 3 282 389 B1

# FIG.4A

| | | | | |
|---|---|---|---|---|
| 0 | 0 | 1 | 0 | 0 |
| 0 | 3 | 2 | 3 | 0 |
| 0 | 4 | 0 | 4 | 0 |
| 5 | 0 | 0 | 0 | 5 |

0 → x, y

# FIG.4B

DISPARITY d

| 1 | 2 | 3 | 4 | 5 |
|---|---|---|---|---|
| 1 | 0 | 0 | 0 | 0 |
| 0 | 1 | 2 | 0 | 0 |
| 0 | 0 | 0 | 2 | 0 |
| 0 | 0 | 0 | 0 | 2 |

y

# FIG.5A

403 POWER POLE

402 PRECEDING VEHICLE

ROAD SURFACE
401

CAPTURED IMAGE

x

y

# FIG.5B

ROAD
SURFACE
501

PRECEDING
VEHICLE
502

503 POWER POLE

V MAP

DISPARITY d

y

# FIG.6

START

→ S101
ACQUIRE LANE WIDTH

→ S102
ACQUIRE REFERENCE ROAD SURFACE

→ S103
SELECT Y COORDINATES

→ S104
CALCULATE DISPARITY d OF REFERENCE ROAD SURFACE IN EACH OF Y COORDINATES

→ S105
CALCULATE ACTUAL DISTANCE FROM VEHICLE TO REFERENCE ROAD SURFACE AT EACH OF Y COORDINATES

→ S106
CALCULATE NUMBER OF PIXELS OF LANE WIDTH CORRESPONDING TO EACH OF Y COORDINATES, WITH RESPECT TO ACTUAL DISTANCE

→ S107
LOCATE DISPARITY EXTRACTION AREA WITH HORIZONTAL WIDTH OF NUMBER OF PIXELS OF LANE WIDTH AT POSITIONS RESPECTIVELY CORRESPONDING TO EACH OF Y COORDINATES

→ S108
EXTRACT DISPARITY FROM DISPARITY EXTRACTION AREA AND GENERATE V MAP

END

# FIG.7

# FIG.8

# FIG.9

FIG.10

# FIG.11

13

ROAD SURFACE ESTIMATING UNIT

| 131 | 132 | 133 | 134 | 135 |
|---|---|---|---|---|
| SAMPLE POINT EXTRACTING UNIT | OUT-OF-RANGE POINT REMOVING UNIT | ROAD SURFACE SHAPE DETECTING UNIT | ROAD SURFACE SUPPLEMENTING UNIT | SMOOTHING PROCESSING UNIT |

# FIG.12

START

↓ ⟋S11

DIVIDE V MAP INTO SEGMENTS

↓ ⟋S12

SET SEARCH RANGE

↓ ⟋S13

EXTRACT SAMPLE POINT
FROM PIXELS INCLUDED IN SEARCH RANGE

↓ ⟋S14

DETECT ROAD SURFACE
BASED ON SAMPLE POINT

↓

END

# FIG.13

```
                 START
                   │
                   │              S20
                   ▼
┌─────────────────────────────────────┐
│   CALCULATE APPROXIMATE STRAIGHT LINE │
│        FROM ALL SAMPLE POINTS         │
└─────────────────────────────────────┘
                   │
                   │              S21
                   ▼
┌─────────────────────────────────────┐
│      CALCULATE THRESHOLD VALUE        │
│  ACCORDING TO X COORDINATE VALUE      │
└─────────────────────────────────────┘
                   │
                   │              S22
                   ▼
┌─────────────────────────────────────┐
│      REMOVE SAMPLE POINT APART        │
│   FROM APPROXIMATE STRAIGHT LINE      │
│        BY THRESHOLD OR MORE           │
└─────────────────────────────────────┘
                   │
                   ▼
                  END
```

# FIG.14

# FIG.15

START

S201

ACQUIRE LANE WIDTH

S202

ACQUIRE REFERENCE ROAD SURFACE

S203

SELECT Y COORDINATES

S204

CALCULATE DISPARITY d OF REFERENCE ROAD SURFACE
IN EACH OF Y COORDINATES

S205

CALCULATE ACTUAL DISTANCE FROM VEHICLE TO
REFERENCE ROAD SURFACE AT EACH OF Y COORDINATES

S206

CALCULATE NUMBER OF PIXELS OF LANE WIDTH
CORRESPONDING TO EACH OF Y COORDINATES,
WITH RESPECT TO ACTUAL DISTANCE

S207

ACQUIRE CURVATURE OF ROAD SURFACE

S208

LOCATE DISPARITY EXTRACTION AREA WITH HORIZONTAL
WIDTH OF NUMBER OF PIXELS OF LANE WIDTH
ACCORDING TO CURVATURE OF ROAD SURFACE

S209

EXTRACT DISPARITY FROM DISPARITY EXTRACTION AREA
AND GENERATE V MAP

END

# FIG.16

# FIG.17

561C

561B

561A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011128844 A
- WO 2016031494 A1

- EP 3188118 A1

**Non-patent literature cited in the description**

- **LOOSE et al.** *13th International IEEE Annual Conference on Intelligent Transportation Systems, Portugal,* 19 September 2010